# EUROPEAN PATENT APPLICATION

(11) **EP 1 036 765 A1**
(43) Date of publication of application: **20.09.2000**
(21) Application number: 98935333.9
(22) Date of filing: 04.08.1998
(51) Int. Cl.: C01D 3/06

(54) **SALT MAKING APPARATUS**

(71) Applicant: Mogami, Susumu, Shimonoseki-shi, Yamaguchi 759-6612 (JP)
(72) Inventor: Mogami, Susumu, Shimonoseki-shi, Yamaguchi 759-6612 (JP)
(74) Representative: Grosse, Wolfgang, Dipl.-Ing.
(86) International application number: JP9803449
(87) International publication number: WO0007939

(57) **Abstract**

A plurality of kilns (2-1 to 2-10) stacked vertically are used and salt water in kilns of all stages is boiled at the same time by high temperature steam flowing in a steam pipe (3) in each kiln and each time when water level in a kiln of a bottommost stage (2-1) drops by a predetermined amount, salt water is poured from a kiln just thereabove (2-12). A drop of water level in the kilns of other stages is compensated by pouring of salt water from a kiln of a stage just above in succession. Then, salt water is always boiled in a kiln of the bottommost stage at a boiling temperature. Further, salt content is accumulated from kilns above successively so as to increase the concentration of the salt water. Thus, no wide installation space is necessary and salt water can be condensed by boiling effectively to collect salt. Because a steam pipe is used as a heat source for heating salt water, scorching of high concentration salt water can be prevented and heating temperature for salt water can be adjusted by a temperature, flow rate and the like of high temperature steam flowing in the steam pipe, so that high quality salt can be collected effectively. Further, because the plurality of the kilns are stacked vertically, radiating heat from a kiln below can be used effectively for heating salt water thereby ensuring an excellent heat efficiency.

## Description

### TECHNICAL FIELD

This invention relates to natural sea salt producing technology and more specifically to a salt producing apparatus for boiling salt water effectively to condense it according to multi-stage type production method.

### BACKGROUND ART

Salt producing procedure based on beach type salt farm method or flow-down type salt farm method which are conventionally known as natural sea salt producing technology is generally as follows.

In case of the beach type salt farm method: (1) sand is spread over a salt farm and then sea water pumped from the sea is sprayed thereover.
(2) After water content is evaporated, sand to which salt adheres is collected.
(3) Collected sand is put in an apparatus whose bottom is formed in a shape of draining board called Mud Well (NUI), sea water is sprayed over the NUI to wash away salt content on the surface thereby obtaining concentrated salt water.
(4) After boiling the collected concentrated salt water in a flat kiln, obtained salt is put into a centrifugal dehydrator to remove water content and bittern.
In case of flow-down type salt farm: (1) sea water is pumped up from the sea and that sea water is made to flow on a mildly inclined panel called flow-down panel.
(2) water content is evaporated during flow-down on the flow-down panel and concentrated salt water is collected.
(3) collected salt water is pumped up to an apparatus called branch rack in which bamboo branches are braided and that salt water is made to drop little by little so as to obtain further concentrated salt water.
(4) After the collected concentrated salt water is condensed by boiling in a flat kiln, the obtained salt is put into a centrifugal dehydrator to remove water content and bittern.

Because in the beach type salt farm method or flow-down type salt farm method, salt is collected by removing water content in sea water as described above, salt containing minerals can be produced.

However, in case where salt is produced according to the above described beach type salt farm method or flow-down type salt farm method, a wide area is needed in a process after sea water is pumped up to collect concentrated salt water up to condensing that salt water by boiling (above described (1)-(3)). Further, production efficiency of these methods is low and they are largely affected by the weather.

An object of the present invention is to solve the above described technical problems and provide a salt producing apparatus capable of producing salt by condensing salt water by boiling effectively without a necessity of a wide installation space.

### DISCLOSURE OF THE INVENTION

In order to solve the above problem, the invention mentioned in claim 1 provides, a salt producing apparatus for producing salt by condensing sea water by boiling, salt water pumped up from a salt lake or salt water in which rock salt is dissolved with various kinds of kiln, the salt producing apparatus comprising a plurality of kilns stacked vertically such that they are spaced to each other, a heat medium pipe disposed for heating salt water in the plural kilns and in which high temperature fluid passes, and discharge ports which can be opened/closed to transport salt water from a kiln of a stage above to a kiln of a stage below in succession.

According to the above construction, in the salt producing apparatus mentioned in claim 1, when high temperature fluid such as high temperature fluid or heated oil is made to flow in a heat medium pipe after the kilns of all stages are filled with salt water, salt water in the kilns of all the stages are heated by the high temperature fluid flowing in the heat medium pipe via a pipe wall and the like of the heat medium pipe, and then begun to be boiled. Then, with evaporation of water content by such boiling, water level of salt water in each kiln drops gradually.

When the water level of a kiln of the bottommost stage drops by a predetermined amount, a valve of a discharge port of a kiln of a stage just above or second stage from the bottom is opened to pour salt water in the kiln of the bottommost stage up to its original water level. Because salt water to be added to the kiln of the bottommost stage has been already heated to a high temperature (boiling temperature), the temperature of the salt water in the kiln of the bottommost stage is not lowered by the pouring of the salt water.

Each time when the water level of the kiln of the bottommost stage drops by the predetermined amount, the valve of the discharge port of the kiln of the second stage from the bottom is repeatedly opened to pour the salt water. The drop of the water level in the second kiln from the bottom is compensated by pouring of the water from a kiln just above it.

By repeating the above procedure, concentration of salt water in the kiln of the bottommost stage is gradually increased. If the concentration of the salt water in a flat kiln of the bottommost stage reaches such a high concentration that salt is deposited, a content is taken out of the kiln of the bottommost stage and transferred to a centrifugal dehydrator to remove water content, bittern and the like.

As described above, a plurality of kilns stacked vertically are used and salt water in kilns of all stages is boiled at the same time by high temperature fluid flowing in a heat medium pipe in each kiln and each time when water level in a kiln of a stage bottommost drops by a predetermined amount, salt water is poured from a kiln just thereabove. A drop of water level in the kilns of other stages is compensated by pouring of salt water from a kiln of a stage just above in succession. Then, salt water is always boiled in a kiln of the bottommost stage at a boiling temperature. Further, salt content is accumulated from kilns above successively so as to increase the concentration of the salt water. Thus, no wide installation space is necessary and salt water can be condensed by boiling effectively to collect salt.

Because a heat medium pipe is used as a heat source for heating salt water, scorching of high concentration salt water can be prevented and heating temperature for salt water can be adjusted by a temperature, flow rate and the like of high temperature fluid flowing in the heat medium pipe, so that high quality salt can be collected effectively.

Further, because the plurality of the kilns are stacked vertically, radiating heat from a kiln below can be used effectively for heating salt water.

According to the invention mentioned in claim 2, on a praise of the apparatus structure mentioned in claim 1, the heat medium pipe is provided in the kiln. As a result, heat from the heat medium pipe can be transmitted to salt water in the kiln effectively.

According to the invention mentioned in claim 3, on a premise of the apparatus structure mentioned in claim 1 or 2, the heat medium pipe is disposed so as to snake. As a result, salt water in the kiln can be heated effectively.

Further, according to the invention mentioned in claim 4, on a premise of the apparatus structure mentioned in any one of claims 1, 2 or 3, the heat medium pipe is provided on plural stages, for example, two stages. As a result, salt water in the kiln can be heated further effectively.

The kiln mentioned here refers to a metallic container (flat kiln) in which a height thereof is smaller than a width thereof and a top portion thereof is open, a metallic container (deep kiln) in which a width thereof and a height thereof are substantially the same as each other and a top portion thereof is open or a metallic container (pressure reduced kiln) having a sealed structure and in which an internal pressure can be reduced. Stainless or titan is preferable for material of the kiln in views of prevention of corrosion due to salt and the like. Preferably, the heat medium pipe is fixed to a bottom of the kiln or the like via a pipe saddle, considering a strength of the pipe so as to prevent a damage due to vibration or the like and elongation due to heat.

As for the kiln of the bottommost stage, it is preferable that the heat medium pipe is not disposed in the kiln but provided on an outside face thereof, for example, along the bottom face thereof. As a result, a procedure for scooping generated substance deposited in the kiln of the bottommost stage can be carried out effectively. If the heat medium pipe is disposed inside the collecting kiln, there is such a disadvantage that scooping of the deposited salt cannot be carried out effectively because the heat medium pipe becomes an obstacle to that procedure or the salt cannot be collected completely from the kiln because salt remains around the heat medium pipe, in the heat medium pipe or on the bottom of the kiln. However, such disadvantages can be eliminated by placing the heat medium pipe outside the kiln 10.

### BRIEF DESCRIPTION OF DRAWINGS

FIG. 1 is a schematic front view showing an example of the embodiment of a salt producing apparatus according to the present invention.
FIG. 2 is a schematic side view showing an example of the embodiment of a salt producing apparatus according to the present invention.
FIG. 3 is a schematic prospective view showing an example of the embodiment of a salt producing apparatus according to the present invention.
FIG. 4(a) is a partially broken-away side view showing an installation condition of a collecting kiln and a heat medium pipe as its heating means, FIG. 4(b) is a plan view thereof and FIG. 4(c) is a sectional view taken along the lines C-C of (a).
FIGs. 5(a) to (d) are sectional views showing an example in which the kiln and heat medium (steam) pipe are integrated.

### BEST MODE FOR CARRYING OUT THE INVENTION

Next, the present invention will be described in detail with reference to the accompanying drawings.

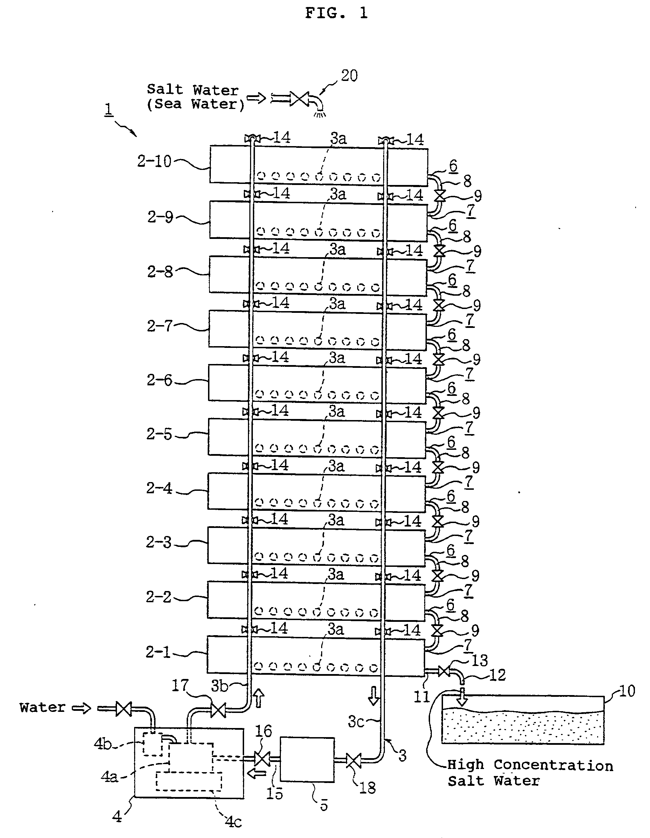

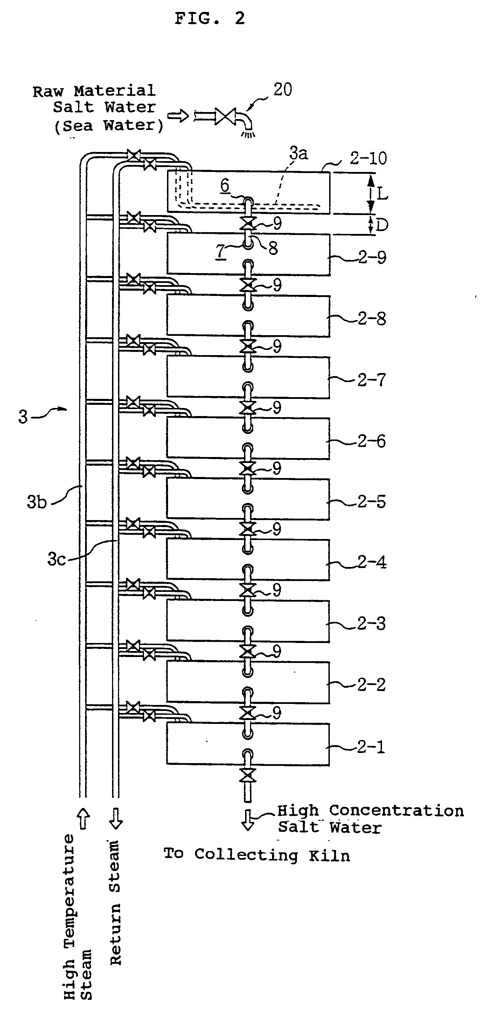

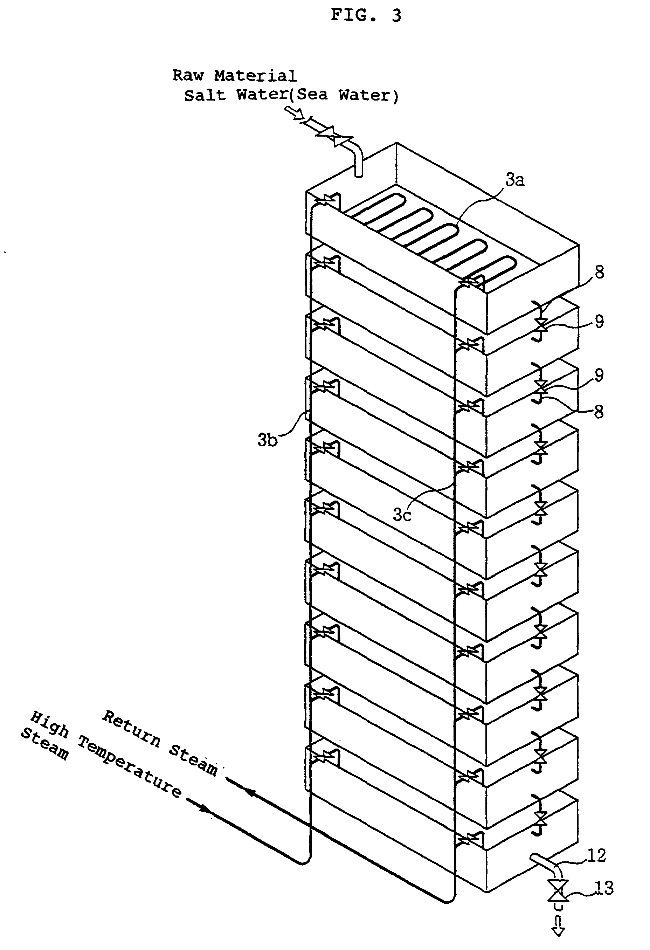

FIG. 1 is a schematic front view showing an example of the embodiment of a salt producing apparatus according to the present invention, FIG. 2 is a schematic side view thereof and FIG. 3 is a schematic prospective view thereof.

First, a structure of the salt producing apparatus of this embodiment will be described.

As shown in the Figure, the salt producing apparatus of this embodiment comprises 10 kilns 2-1 to 2-10 stacked vertically such that they are spaced to each other, steam pipe (heat medium pipe) 3 provided to heat salt water in the kilns 2-1 to 2-10 in batch and through which high temperature steam passes, a steam generating unit 4 for feeding high temperature steam (approximately 140°) into the steam pipe 3, a steam collecting unit 5 for collecting return steam from the steam pipe 3 and a raw material feeding unit 20 for feeding salt water pumped up from sea into the topmost kiln 2-10.

The kilns 2-1 to 2-10 are stainless made tanks having the same shape and dimensions, in which a width of each thereof is smaller than a height of each thereof and a top thereof is open and supported by supporting structures not shown. A gap D between a kiln above and a kiln below is set to be smaller than the height L of the kiln.

These kilns except the bottommost kiln 2-1 are provided with a solution outlet port (pouring gate) 6 for transporting salt water to a lower kiln in succession. Further, these kilns except the topmost kiln 2-10 are provided with a solution receiving port 7 for receiving salt water from a upper kiln in succession. The solution outlet port 6 and solution receiving port 7 which are vertically adjacent to each other are connected to each other via a pipe 8, so that the salt water can be made to flow down from the topmost kiln 2-10 to the bottommost kiln 2-1 in succession by opening a valve 9 provided halfway of each pipe 8. Further, the bottommost kiln 2-1 is provided with a discharge port 11 for collecting a content (saturated or over saturated salt water or salt water in a condition in which salt is deposited). The content in the kiln 2-1 can be transported to a collection kiln 10 or the like by opening a valve 13 on a discharge pipe 12 connected to the discharge port 11.

The steam pipe 3 comprises heat exchange pipe 3a provided along an inside bottom(in the vicinity of a bottom surface) of each of the kilns 2-1 to 2-10 so to snake at a predetermined pitch, steam supply pipe 3b for supplying high temperature steam generated in the steam generating unit 4 to the heat exchange pipe in each of the kilns 2-1 to 2-10 and steam collecting pipe 3c for introducing return steam gathered from the heat exchange pipe 3a to the steam collecting unit 5. That is, a downstream end of the heat exchange pipe 3a in each of the kilns 2-1 to 2-10 is connected to the steam collecting unit 5 and a upstream end thereof is connected to the steam collecting unit 5. The upstream end portion and down stream end portion of each of the heat exchange pipes 3a are provided each with a valve 14.

The steam generating unit 4 comprises an evaporating bath 4a for generating high temperature steam, a pouring unit 4b for supplying water into the evaporation bath 4a and a combustion unit 4c for heating the evaporation bath 4a at a high temperature. A upstream end of the steam supply pipe 3b is connected to a steam outlet port of the evaporation bath 4a.

The steam collecting unit 5 is a unit for collecting steam or hot water (or warm water) sent through the steam collecting pipe 3c for reuse and the steam or hot water (or warm water) collected therein is returned into the evaporation bath 4a of the steam generating unit 4 via a return pipe 15. A check valve 16 is provided halfway of the return pipe 15.

A method for producing salt with the salt producing apparatus of this embodiment will be described.

First, the raw material feeding unit 20 pours salt water pumped from the sea into the topmost kiln 2-10. At that time, salt water is poured with the valve 9 in the pipe 8 connected to each solution outlet port 6 open. As a result, the salt water is poured into the lower kilns 2-9 to 2-1 in succession. Then, if a predetermined quantity of the salt water is collected in the bottommost kiln 2-1, the valve 9 in the pipe 8 connected to each solution outlet port 6 is closed and heating of the salt water by the steam pipe 3 is started.

At that time, to prevent a damage of the steam pipe 3 due to a difference in temperature between inside and outside, the valves 17, 18, 14 of the steam pipe 3 are opened only slightly to heat the steam pipe 3 gradually with a small amount of steam. If the steam pipe 3 is heated to a predetermined temperature, the valves 17, 18, 14 are opened to a larger opening degree so as to allow high temperature steam to flow into the steam pipe 3 while adjusting its flow rate, thereby heating the salt water.

Salt water in the kilns 2-1 to 2-10 of all the stages is heated indirectly by high temperature steam flowing in each of the heat exchange pipes 3a of the steam pipe 3 via a pipe wall and the like of the heat exchange pipe 3a and boiled after a while. Water content is evaporated by the boiling so that water level of salt water in each of the kilns 2-1 to 2-10 drops gradually.

Then, if the water level of the bottommost kiln 2-1 drops by a predetermined amount, for example, 5 cm, the valve 9 of the solution outlet port 6 of a kiln just above that kiln, that is, the second kiln from the bottom is opened to pour salt water into the bottommost kiln 2-1 up to its original water level. Because the salt water to be poured into the bottommost kiln 2-1 has been heated to a high temperature (boiling temperature), the temperature of the salt water in the bottommost kiln is not lowered by the above pouring of the salt water.

After that, each time when the water level in the bottommost kiln 2-1 drops by the predetermined amount, the valve 9 of the solution outlet port 6 of the second kiln 2-2 from the bottom is repeatedly opened to pour water therein. A lowered amount of water level in the second kiln from the bottom is compensated by pouring of water from a kiln 2-3 just above that kiln. By determining the predetermined amount of water level drop aforementioned to be 4-5 cm (about 150-200 liters), the above operation can be carried out effectively.

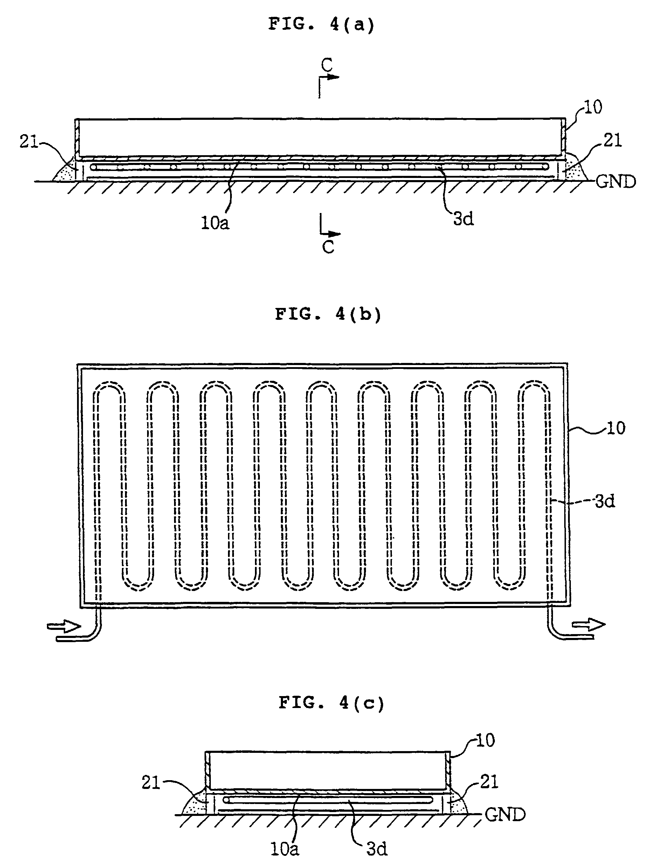

By repeating the above procedure, the concentration of salt water in the kiln 2-1 of the lowest stage is gradually increased. When the concentration of salt water in the kiln 2-1 of the lowest stage reaches such a high concentration that salt is deposited, a valve 13 in the discharge pipe 12 connected to the kiln 2-1 of the lowest stage is opened to collect high concentration salt water in a collecting kiln 10 or the like. Water content is evaporated further by heating with a steam pipe (see FIG. 4) provided on the collecting kiln 10 so as to deposit salt and then this is brought into a centrifugal dehydrator so as to remove water content, bitter salt and the like. If the amount of deposition of salt is sufficient when collected in the collecting kiln 10, evaporation procedure by heating in the collecting kiln 10 is not necessary.

FIG. 4(a) is a partially broken-away sectional view showing the aforementioned collecting kiln 10 and an installation condition of the steam pipe as its heating means, FIG. 4(b) is a plan view thereof, and FIG. 4(c) is a sectional view taken along the line C-C. As shown in the Figure, the steam pipe 3d for heating the collecting kiln 10 is placed along a bottom surface 10a of the collecting kiln 10 so as to snake at a predetermined pitch. High temperature steam to be fed to this steam pipe 3d is also supplied from the aforementioned steam generating unit 4 and after heat exchange is terminated, is collected to the steam collecting unit 5. The collecting kiln 10 is placed on heat insulating material wall 21 formed by arranging bricks (heat insulating material) along an edge of the bottom surface of the collecting kiln 10 on the ground (GND). The bare steam pipe 3d is disposed within a space surrounded by the bottom surface 10a of the collecting kiln 10, heat insulating material wall 21 and ground (GND). An outside of the heat insulating material wall 21 is covered with concrete or soil to raise heat maintenance performance and airtightness.

Because the steam pipe 3d and bottom surface 10a of the collecting kiln 10 are sealed with the heat insulating material wall 21, radiating heat from the steam pipe 3d is prevented from escaping outside, so that heat is concentrated on the bottom surface 10a of the collecting kiln 10 thereby making it possible to heat salt water in the collecting kiln 10 effectively.

Further, because the steam pipe is not disposed inside the collecting kiln 10, the procedure for scooping deposited salt can be carried out effectively. If the steam pipe is disposed inside the collecting kiln 10, there is such a disadvantage that the procedure for scooping deposited salt is difficult because the steam pipe becomes an obstacle to scooping from the kiln or the salt cannot be collected completely from the collecting kiln because salt adheres to a periphery of the steam pipe and remains thereon. However, such a disadvantage can be eliminated by placing the steam pipe 3d outside the aforementioned collecting kiln 10.

In the salt producing apparatus of this embodiment, as described above, a plurality of the kilns 2-1 to 2-10 stacked vertically are used and salt water in the kilns 2-1 to 2-10 of all the stages is boiled at the same time by high temperature steam flowing in the heat exchange pipe 3a provided in the kilns 2-1 to 2-10. Each time when water level of the kiln 2-1 of the bottommost stage drops by a predetermined amount, water is fed from the kiln 2-2 just above that kiln. A drop of water level in the kilns of other stages except the topmost stage is compensated by pouring of salt water from a kiln just above each one, so that salt water in the kiln 2-1 of the lowest stage is always boiled at a boiling temperature. Further, salt content is accumulated in succession from upper stage kilns 2-2 - 2-10 so as to intensify the concentration of salt water. Therefore, it is possible to condense salt water by boiling effectively without a necessity of a wide installation space, thereby finally salt being obtained.

Because high temperature steam flowing in the steam pipe 3 is used as a heat source for heating salt water, it is possible to prevent scorching of salt water converted to high concentration and heating temperature for salt water can be adjusted depending on the temperature, flow rate and the like of high temperature steam flowing in the steam pipe 3. Therefore, a high quality salt can be collected more effectively as compared to a salt producing apparatus disclosed in for example, Unexamined Published Japanese Patent Application No. HEI8-353197.

Although the above embodiment has been described by taking the salt producing apparatus having 10 stages of the kilns as an example, it is possible to increase the number of the kilns over 10 stages by increasing the temperature, flow rate and the like of the high temperature steam flowing in the steam pipe 3. Further, a structure of less than nine stages may be achieved if there is a strict restriction in an installation area, capacity of the high temperature steam generating unit 4 and the like.

Although in the above embodiment, sea water pumped from the sea is poured into the kiln 2-10 of the topmost stage as it is, when the sea water is preliminarily heated and then poured, a drop of the temperature of the sea water when it is poured into the kiln 2-10 can be suppressed, so that heating of the salt water can be performed more effectively. At this time, it is possible to use heat from steam or hot water collected by the steam collecting unit 5 as a heat source for preheating.

Although, in the above embodiment, high temperature steam is used as a high temperature fluid (heat medium), oil heated to a high temperature (e.g., 350°C to 400°C) as a heat medium so that a further effective collection of salt is achieved. Further, as the heat medium, a mixture of water and oil may be used.

When sea water pumped from the sea is not poured directly into the kiln 2-10 of the topmost stage as it is, but it is poured after water content is reduced by using a fresh water producing apparatus, the high concentration of salt water can be intensified, so that the salt water can be condensed by boiling effectively to obtain salt.

When a water level detecting means (float switch, optical displacement gauge, ultrasonic displacement gauge, gravitational gauge or the like) is provided on each of the kilns 2-1 to 2-10 and at the same time, a control device for controlling an opening/closing operation of the valve 9 or an operation of the raw material feeding unit 20 according to a detection signal from such a water level detecting means is provided, a procedure for pouring raw material salt water into the kiln 2-10 of the topmost stage and a procedure for pouring water from a kiln of a stage above to a kiln of a stage below can be completely automated.

Although in the above examples, rectangular kilns are used, other shapes, for example, a bottomed cylindrical kiln may be used.

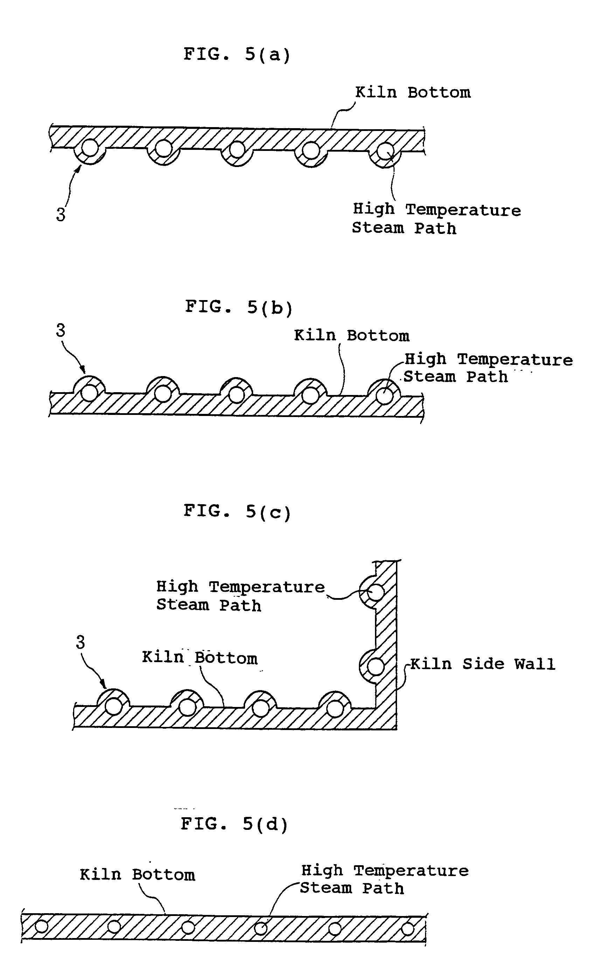

Further, as shown in FIGs. 5(a)-(d), the steam pipe 3 may be structured integrally with the kiln.

By providing vertically plural stage of the steam pipes in the kiln, the salt water can be heated further effectively with a high temperature steam or a high temperature oil flowing in the steam pipe.

Further, the salt producing apparatus of the above embodiment can be used as a producing apparatus for a reproduced salt. In this case, original salt (natural salt like rock salt) is put into the kiln 2-1 of the topmost stage and mixed with sea water so as to obtain an appropriate concentration. After the mixed salt water is poured into the kilns 2-1 to 2-10 of all the stages up to a predetermined water level, salt water in the kilns 2-1 to 2-10 of all the stages is boiled at the same time with radiating heat from the steam pipe 3 like the above described case and each time when the water level in the kiln 2-1 of the bottommost stage drops by a predetermined amount, salt water is poured from the kiln 2-2 just above. A drop of the water level in the kilns 2-3 to 2-9 of other stages except the topmost stage is compensated by pouring of water from a kiln just above in succession and salt water is always boiled at a boiling temperature in the kiln 2-1 of the bottommost stage. According to this producing method, it is possible to effectively produce a high quality reproduced salt similar to natural sea salt collected from sea water by adding mineral contents contained in the sea water to the original salt.

In the aforementioned producing apparatus for the reproduced salt, it is desirable to provide the kiln 2-1 of the topmost stage to which the original salt is applied, with an agitation device for agitating and mixing the original salt and sea water. As the agitation device, a type which agitates and mixes mechanically original salt and sea water by moving an agitation plate or the like or a type which agitates and mixes original salt and sea water by generating swirls by bubbles of compressed air may be used. Further, it is permissible to provide the wall of the steam pipe with steam injection holes and agitate and mix with high temperature steam bubbles injected from the steam pipe.

Although the above described embodiments concern the salt producing apparatus, the structure of the apparatus shown here can be applied to a solution condensing apparatus for boiling water solution in which other material than salt is dissolved to collect that material. For example, by boiling solution from which salt is removed with a centrifugal dehydrator in a process for producing salt effectively like in case of sea water, it is possible to collect bitter solution from that solution.

Although in the above examples, a kiln whose top is open is used, when any one of the plural kilns is constructed in a sealed structure in which an internal pressure can be reduced and solution is boiled at a boiling point lowered by reducing the pressure by radiating heat from the steam pipe, the dissolved material in the solution can be collected further effectively.

### INDUSTRIAL APPLICABILITY

As described above, according to the invention described in claim 1, a plurality of kilns stacked vertically are used and salt water in kilns of all stages is boiled at the same time by high temperature steam or high temperature oil flowing in a heat medium pipe in each kiln and each time when water level in a kiln of a bottommost stage drops by a predetermined amount, salt water is poured from a kiln just thereabove. A drop of water level in the kilns of other stages is compensated by pouring of salt water from a kiln of a stage just above in succession. Then, salt water is always boiled in a kiln of the bottommost stage at a boiling temperature. Further, salt content is accumulated from kilns above successively so as to increase the concentration of the salt water. Thus, no wide installation space is necessary and salt water can be condensed by boiling effectively to collect salt.

Because high temperature steam or high temperature oil flowing in the heat medium pipe is used as a heat source for heating salt water, scorching of high concentration salt water can be prevented, and heating temperature for salt water can be adjusted by a temperature, flow rate and the like of high temperature steam or high temperature oil flowing in the heat medium pipe, so that high quality salt can be collected effectively.

Further, because the plurality of the kilns are stacked vertically, radiating heat from a kiln of a stage below can be used effectively for heating salt water in a kiln of a stage above, thereby an excellent heat efficiency being provided.

According to the invention mentioned in claim 2, the heat medium pipe is provided in the kiln, and therefore, heat from the heat medium pipe can be transmitted to salt water in the kiln effectively. As a result, the salt water can be condensed by boiling more effectively than the invention of claim 1 to collect salt.

According to the invention mentioned in claim 3, the heat medium pipe is disposed so as to snake, so that salt water in the kiln can be heated effectively. As a result, the salt water can be condensed by boiling more effectively than the invention of claim 1, 2 to collect salt.

According to the invention mentioned in claim 4, the steam pipe is provided on plural stages, so that the salt water in the kiln can be heated effectively. As a result, the salt water can be condensed by boiling more effectively than the inventions of claim 1, 2 and 3 to collect salt.

## Claims

1. A salt producing apparatus for producing salt by condensing salt water by boiling, comprising:
a plurality of kilns stacked vertically;
heat medium pipe for heating salt water in the plurality of said kilns in batch and in which high temperature fluid passes; and
discharge port which can be opened/closed to transport salt water from a kiln of a stage above to a kiln of a stage below in succession.

2. A salt producing apparatus according to claim 1 wherein said heat medium pipe is provided in each of said kiln.

3. A salt producing apparatus according to claim 1 or 2
wherein said heat medium is disposed to snake in said kiln.

4. A salt producing apparatus according to any one of claims 1, 2 or 3 wherein said heat medium pipe is disposed on plural stages in said kiln.
